# EUROPÄISCHE PATENTANMELDUNG

(11) **EP 2 584 692 A2**
(43) Veröffentlichungstag der Anmeldung: **24.04.2013**
(21) Anmeldenummer: 12007149.3
(22) Anmeldetag: 16.10.2012
(51) Int. Cl.: H02M 7/5387

(54) **Wechselrichter mit asymmetrischem Betrieb der Drosseln**

(30) Priorität: 21.10.2011 DE 102011116593
(71) Anmelder: Diehl AKO Stiftung & Co. KG, 88239 Wangen im Allgäu (DE)
(72) Erfinder: Schill, Christoph, 88213 Ravensburg (DE)
(74) Vertreter: Diehl Patentabteilung

(57) **Zusammenfassung**

Wechselrichter (1), insbesondere Solarwechselrichter, zum Umsetzen einer Gleichspannung in eine Wechselspannung mit einem Zwischenkreis (3) umfassend eine obere Zwischenkreisschiene (3a) und eine untere Zwischenkreisschiene (3b), mit einer ersten Halbbrücke (11, 12), die zwischen die obere Zwischenkreisschiene (3a) und die untere Zwischenkreisschiene (3b) geschaltet ist, mit einer zweiten Halbbrücke (13, 14), die zwischen die obere Zwischenkreisschiene (3a) und die untere Zwischenkreisschiene (3b) geschaltet ist, mit einer ersten Drossel (20), die einen Ausgang der ersten Halbbrücke (11, 12) mit einem ersten Anschlusspol (25) der Wechselspannung verbindet, und mit einer zweiten Drossel (22), die einen Ausgang der zweiten Halbbrücke (13, 14) mit einem zweiten Anschlusspol (25) der Wechselspannung verbindet, wobei eine der Drosseln (20, 22) bei einem geringeren Strom sättigt und/oder höhere Schaltverluste aufweist als die andere der Drosseln (20, 22). Die Drosseln (20, 22) des Wechselrichters (1) werden asymmetrisch betrieben.

## Beschreibung

Die Erfindung betrifft einen Wechselrichter, insbesondere einen Solarwechselrichter, zum Umsetzen einer Gleichspannung in eine Wechselspannung, mit einem Zwischenkreis, umfassend eine obere Zwischenkreisschiene und eine untere Zwischenkreisschiene, mit einer ersten Halbbrücke, die zwischen die obere Zwischenkreisschiene und die untere Zwischenkreisschiene geschaltet ist, mit einer zweiten Halbbrücke, die zwischen die obere Zwischenkreisschiene und die untere Zwischenkreisschiene geschaltet ist, mit einer ersten Drossel, die einen Ausgang der ersten Halbbrücke mit einem ersten Anschlusspol der Wechselspannung verbindet und mit einer zweiten Drossel, die einen Ausgang der zweiten Halbbrücke mit einem zweiten Anschlusspol der Wechselspannung verbindet.

An den Anschlusspolen kann ein Stromnetz angeschlossen sein, in welches der Wechselrichter einspeist. Es ist aber auch denkbar, einen beliebigen Wechselstromverbraucher zu speisen, wie z. B. einen elektrischen Motor. Auch ist es denkbar, dass der Wechselrichter zeitweise oder dauernd eine umgekehrte Energieflussrichtung aufweist, also Energie vom Ausgang, z. B. vom Stromnetz, aufnimmt und auf die Gleichstromseite abgibt. Ein bekanntes Einsatzgebiet wäre beispielsweise die Bereitstellung von Blindleistung oder das Aufheizen von Solargeneratoren, um Schnee abzuschmelzen.

Ein Wechselrichter der eingangs genannten Art wird insbesondere zur Stromversorgung im Bereich erneuerbarer Energien eingesetzt. Um die Kosten zu senken, ist ein hoher Wirkungsgrad des Wechselrichters bei gleichzeitig geringem Bauteilaufwand gewünscht.

Der angegebene Wechselrichter enthält einen Zwischenkreis, welcher mit Gleichstrom gespeist wird. Unter dem Begriff eines Zwischenkreises wird insofern ein Gleichspannungs-Zwischenkreis verstanden. Als Gleichstromquelle sind verschiedene Quellen denkbar, insbesondere sind dies Solargeneratoren, Brennstoffzellen, thermoelektrische Generatoren, Akkumulatoren, Batterien, Superkondensatoren, elektromagnetische Generatoren, ACDC-Wandler oder DCDC-Wandler.

Oftmals ist zwischen der oberen und der unteren Zwischenkreisschiene ein Zwischenkreis-Kondensator angeordnet, um die pulsierende Leistungsaufnahme des Wechselrichters zu puffern. Insbesondere ist dies der Fall, wenn als Gleichstromquelle ein Solargenerator verwendet wird. Ein Zwischenkreis-Kondensator zur Stabilisierung des Zwischenkreises kann jedoch insbesondere dann entfallen, wenn der Innenwiderstand der Gleichstromquelle sehr klein ist.

Ein Wechselrichter der eingangs genannten Art ist z.B. aus der EP 1 369 985 B1 bekannt. Entsprechend vorliegender Fig. 1, die einen solchen Wechselrichter des Standes der Technik zeigt, wird der Zwischenkreis 3 insbesondere durch einen Solargenerator 2 als Gleichstromquelle gespeist. An die Anschlusspole 25, 26 des Wechselrichters sind die Leitungen oder Leiter L und N eines Wechselstromnetzes 30 angeschlossen. Der dargestellte Wechselrichter weist einen Zwischenkreis-Kondensator 4, eine sogenannte H4-Brücke, welche aus den Schaltelementen 11 bis 14 gebildet ist, und zwei Drosseln 20 und 22 auf. Die H4-Brücke umfasst eine erste Halbbrücke, bestehend aus den Schaltelementen 11 und 12, und eine zweite Halbbrücke, bestehend aus den Schaltelementen 13 und 14.

Zum Betrieb eines derartigen Wechselrichters gibt es grundsätzlich verschiedene Möglichkeiten, was daraus resultiert, dass für ein angeschlossenes Netz oder für einen angeschlossenen Verbraucher wie einem Elektromotor lediglich die Potenzialdifferenz zwischen den Anschlusspolen relevant ist. Bei einem symmetrischen Betrieb des Wechselrichters werden jeweils die diagonalen Schaltelemente 11 und 14, bzw. 12 und 13 synchron und im Wechsel zu einander getaktet. Die Taktfrequenz liegt meist im Bereich zwischen 5 und 50 kHz. Das Tastverhältnis der Schaltelemente 11 bis 14, also das Verhältnis aus Einschaltdauer zur Periodendauer der Taktung, wird über eine Steuereinheit mit einem Pulsweitenmodulator zeitlich variiert, so dass ein gewünschter Stromverlauf oder Spannungsverlauf zwischen den Anschlusspolen 25 und 26 resultiert. Beispielsweise wird ein gewünschter Sinusstrom in ein angeschlossenes Netz eingespeist bzw. ein Inselnetz mit einer gewünschten Sinusspannung versorgt.

Bei dem symmetrischen Betrieb, wie er auch in der EP 1 369 985 B1 als Stand der Technik beschrieben ist, wird entsprechend Fig. 1 die erste Drossel 20 spiegelsymmetrisch zur zweiten Drossel 22 betrieben, so dass die Spannung über der ersten Drossel 20 stets gleich groß ist wie die Spannung über der zweiten Drossel 22, jedoch die umgekehrte Polarität hat. Dadurch werden Potenzialsprünge zwischen einem angeschlossenen Wechselstromnetz 30 und dem Zwischenkreis 3 bzw. der Gleichstromquelle, wie insbesondere einem Solargenerator 2, vermieden. Gerade im Falle eines Solargenerators ist dies notwendig, da dieser aufgrund seiner großen Fläche eine hohe Erdkapazität aufweist. Potenzialsprünge würden unerwünscht hohe Funkstörungen verursachen.

Ein bekannter Nachteil eines derartigen symmetrischen Betriebs des Wechselrichters besteht darin, dass nur zwei Schaltzustände des Wechselrichters auftreten. In einem der beiden Schaltzustände wird Energie vom Zwischenkreis-Kondensator 4 ins Wechselstromnetz 30 übertragen. Im anderen Schaltzustand, d. h. im Freilaufzustand der Drosseln 20 und 22, fließt Energie zurück in den Zwischenkreis-Kondensator 4. Der Stromfluss in umgekehrter Richtung geschieht hierbei über die den Schaltelementen 11 bis 14 antiparallel zugeschalteten Freilaufdioden. Durch die hin- und herpendelnde Energie entstehen hohe Verluste in der gesamten Schaltung. Zudem werden große Drosseln 20 und 22 benötigt.

Alternativ ist es auch bekannt, zum Betrieb des Wechselrichters das Verfahren des sogenannten Einphasenchoppings zu verwenden. Bei diesem Verfahren, wie es ebenfalls als bekannt in der EP 1 369 985 B1 beschrieben ist, wird die erste Halbbrücke 11, 12 dauerhaft entweder an die obere Zwischenkreisschiene 3a oder dauerhaft an die untere Zwischenkreisschiene 3b geklemmt, während der Spannungsverlauf zwischen den Anschlusspolen 25 und 26 ausschließlich durch eine entsprechende Taktung der zweiten Halbbrücke 13, 14 erzeugt wird. Während einer positiven Halbwelle der Wechselspannung wird hierzu das Schaltelement 12 dauerhaft geschlossen, während die Schaltelemente 13 und 14 abwechselnd hochfrequent getaktet werden. Während der negativen Halbwelle wird in analoger Weise das Schaltelement 11 dauerhaft geschlossen, während wiederum die Schaltelemente 13 und 14 abwechselnd takten.

Es ist jeweils ein direkter Freilauf der Drosseln 20 und 22 über die Schaltelemente 12 und 14 bzw. 11 und 13 möglich, was einem dritten Schaltzustand des Wechselrichters entspricht. Eine Rückspeisung in den Zwischenkreis-Kondensator 4 wird verhindert. Da die erste Halbbrücke 11, 12 nicht hochfrequent taktet, sind die Schaltverluste deutlich reduziert. Außerdem ist der hochfrequente Spannungshub über den Drosseln 20 und 22 halbiert. Das insgesamt benötigte Drosselvolumen kann deshalb deutlich reduziert werden.

Beim Einphasenchopping ist die erste Halbbrücke während einer Halbwelle dauerhaft entweder auf die obere Zwischenkreisschiene oder auf die untere Zwischenkreisschiene geklemmt. Beim Wechsel zwischen der positiven und der negativen Halbwelle wird die Halbbrücke umgeschaltet. Nachteiligerweise hat dies zur Folge, dass im Falle eines mit einem Bezugspotenzial, insbesondere mit Erde, verbundenen Verbrauchers oder Netzes das Potenzial der Gleichstromquelle, insbesondere eines Solargenerators 2, gegenüber der Ausgangsseite schlagartig springt. Im Falle eines Solargenerators 2 sind dies mehrere 100 V. Ein schlagartiger Potenzialsprung hat hochfrequente Ableitströme zur Folge, wodurch Funkstörungen auftreten, die in der Regel nicht tolerierbar sind. Der mit dem Verfahren des Einphasenchoppings betriebene Wechselrichter hat nun zwar gegenüber der symmetrischen Betriebsweise einen besseren Wirkungsgrad und ein geringeres Drosselvolumen, kann jedoch aufgrund der auftretenden Funkstörungen nicht eingesetzt werden.

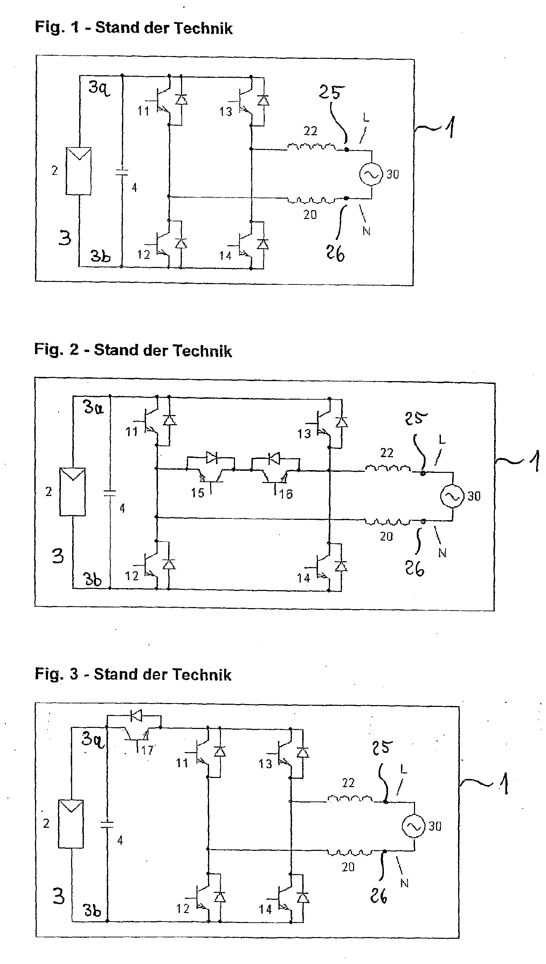

Zur Lösung dieses Problems offenbart die EP 1 369 985 B1 einen abgeänderten Wechselrichter, wie er vorliegend durch Fig. 2 wiedergegeben ist. Zum Betrieb dieses Wechselrichters werden beide Drosseln 20 und 22 wie vorbeschrieben symmetrisch betrieben, so dass keine unerwünschten Potenzialsprünge auftreten. Zusätzlich sind jedoch zwei weitere Schaltelemente 15 und 16 enthalten, die nun einen direkten Freilauf der Drosseln 20 und 22 ermöglichen, während die anderen Schaltelemente 11 bis 14 ausgeschaltet sind. Während der positiven Halbwelle ist hierzu das Schaltelement 16 dauerhaft geschlossen und das Schaltelement 15 geöffnet. Während der negativen Halbwelle wird das Schaltelement 16 geöffnet und das Schaltelement 15 geschlossen. Ein Rückfluss der Energie in den Zwischenkreis 3 findet insofern nicht statt. Dadurch ergibt sich bei symmetrischem Betrieb der Drosseln 20 und 22 ein dem Einphasenchopping vergleichbarer Wirkungsgrad, wobei zugleich die unerwünschten Potenzialsprünge vermieden sind. Auch die benötigte Gesamt-Baugröße für die Drosseln 20 und 22 ist in vergleichbarer Weise reduziert, da beide Drosseln 20 und 22 nur den halben Spannungshub sehen wie bei einer symmetrischen Taktung des Wechselrichters entsprechend Fig. 1. Nachteiligerweise ergibt sich aber für einen derartigen Wechselrichter entsprechend Fig. 2 ein Mehraufwand durch die beiden zusätzlichen Schaltelemente 15 und 16.

Fig. 3 zeigt einen weiteren Wechselrichter nach Stand der Technik, wie er aus der DE 10 2004 030 912 B3 bekannt ist. Während der positiven Halbwelle fließt pulsweise Strom vom Zwischenkreis-Kondensator 4 über die Schaltelemente 17, 13 und 12 und die beiden Drosseln 20 und 22 ins Netz 30. Während der negativen Halbwelle wird analog verfahren.

Während des Freilaufs der Drosseln 20 und 22 fließt der Strom über die Schaltelemente 11 und 13, während die restlichen Schaltelemente 12, 14 und 17 geöffnet sind. Somit ist auch hier ein direkter Freilauf der Drosseln 20 und 22 möglich, und es ergeben sich dieselben Vorteile wie bei dem Betrieb des Wechselrichters entsprechend Fig. 2.

Nachteilig ist jedoch auch hier, dass gegenüber dem Wechselrichter entsprechend Fig. 1 ein zusätzliches Schaltelement 17 benötigt wird, und dass der Strom zeitweise über drei statt nur über zwei Schaltelemente fließt, wodurch zusätzliche Verluste entstehen.

Aufgabe der Erfindung ist es, einen verbesserten Wechselrichter anzugeben, der mit wenig Kostenaufwand einen möglichst hohen Wirkungsgrad erreicht. Eine weitere Aufgabe der Erfindung ist, ein verbessertes Verfahren zum Betrieb eines Wechselrichters anzugeben, mit dem bei geringem Kostenaufwand ein möglichst hoher Wirkungsgrad erreicht wird.

Die erstgenannte Aufgabe wird erfindungsgemäß gelöst durch einen Wechselrichter der eingangs genannten Art, wobei eine der Drosseln bei einem geringeren Strom sättigt und/oder höhere Schaltverluste aufweist als die andere der Drosseln.

Die zweitgenannte Aufgabe wird erfindungsgemäß durch ein Betriebsverfahren für einen Wechselrichter der eingangs genannten Art gelöst, wobei die beiden Drosseln asymmetrisch betrieben werden. Insbesondere ist ein solches asymmetrisches Betriebsverfahren für einen erfindungsgemäßen Wechselrichter vorgesehen, wonach die durch eine niedrigere Stromsättigung und/oder durch höhere Schaltverluste bestimmte Drossel während hoher Taktraten mit niedrigem Strom belastet wird und durch die nur während einer dauerhaften Klemmung der entsprechenden Halbbrücke ein hoher Strom fließt.

Die eingesetzte Drossel muss daher ihre Glättungsfunktion (bei hohen Taktraten) lediglich bei niedrigeren Strömen erfüllen. Da diese Drossel im Bereich größerer Ströme nicht getaktet wird, kann sie in diesem Fall in Sättigung sein. Insgesamt kann dadurch die betreffende Drossel deutlich kleiner ausgelegt werden, wodurch sich der Kostenaufwand reduziert und zudem die Drosselverluste sinken.

Insbesondere ermöglicht es die Erfindung, eine Drossel zu verwenden, die bei getaktetem Betrieb höhere Verluste hat, wie z. B. eine Eisenpulverdrossel. Derartige Drosseln sind in der Regel kleiner und billiger als die bislang für Wechselrichter häufig verwendeten verlustarmen Ferritdrosseln. Da die entsprechende Drossel nur zeitweise und bei geringem Strom getaktet wird, sind die erhöhten Schaltverluste ohne große Bedeutung.

Das angegebene Verfahren erlaubt es insofern, asymmetrisch ausgestaltete Drosseln einzusetzen, es ist jedoch ohne Einschränkung auch für einen Wechselrichter anzuwenden, der mit symmetrischen Drosseln versehen ist. Wird die Taktung einer Drossel im Bereich größerer Ströme ausgesetzt, so werden auch die Schaltverluste der zugehörigen Schaltelemente stark reduziert. Das angegebene Verfahren zum Betrieb des Wechselrichters bietet daher auch dann erhebliche Vorteile, wenn zwei gleiche Drosseln eingesetzt werden.

In einer vorteilhaften Ausgestaltung umfasst der Wechselrichter zusätzlich wenigstens einen Filter-Kondensator, der wenigstens einen der Anschlusspole der Wechselspannung mit dem Zwischenkreis verbindet.

Der Anschluss mit dem Zwischenkreis kann über die obere Zwischenkreisschiene oder über die untere Zwischenkreisschiene erfolgen. Auch kann dieser Anschluss ein Mittenabgriff eines Zwischenkreis-Kondensators sein, falls dieser aus einer Reihenschaltung von Teilkondensatoren besteht.

Durch den wenigstens einen Filter-Kondensator wird die Ausgangsseite des Wechselrichters, insbesondere ein angeschlossenes Wechselstromnetz, gegenüber dem Zwischenkreis bzw. gegenüber der Gleichstromquelle, insbesondere gegenüber einem Solargenerator, hochfrequenzmäßig abgeblockt.

Während sich bei einem nicht spiegelsymmetrischen Betrieb der beiden Drosseln, wie eingangs beschrieben, unerwünschte Potenzialsprünge zwischen der Ausgangsseite und dem Zwischenkreis ergeben, wird dies durch das Vorsehen eines Filter-Kondensators zwischen einem der Anschlusspole und dem Zwischenkreis verhindert. Dadurch wird es möglich, die beiden Drosseln zu entkoppeln und gewünscht asymmetrisch zu betreiben ohne dass Funkstörungen auftreten. Jedoch ist ein derartiger Filter-Kondensator für einen asymmetrischen Betrieb der Drosseln nicht zwingend erforderlich.

Bevorzugt ist zur Entkopplung der Drosseln jedoch der Filter-Kondensator mit dem Anschlusspol verbunden, in dem die Drossel mit geringerer Stromsättigung und/oder mit höheren Schaltverlusten geschaltet ist.

In einer zweckmäßigen Ausgestaltung des Wechselrichters umfassen die Halbbrücken jeweils zwei getaktet betreibbare Halbleiterschaltelemente, die mit je einer Freilaufdiode beschaltet sind. Die Halbleiterschaltelemente sind insbesondere Mosfets oder IGBT's. Die Freilaufdioden sind antiparallel geschaltet und schützen die Halbleiterschaltelemente vor Rückwärtsspannungen bzw. ermöglichen den Freilauf der Drosseln.

Die Taktung der Schaltelemente kann mit fester oder variabler Frequenz erfolgen. Insbesondere kann im Bereich des Spannungsmaximums der ausgegebenen Wechselspannung die Frequenz abgesenkt werden, um die Schaltverluste zu verringern.

In einer vorteilhaften Ausgestaltung des Betriebsverfahrens wird die erste Halbbrücke im Bereich des Spannungsmaximums der ausgegebenen Wechselspannung in jeder Halbwelle dauerhaft abwechselnd mit der oberen Zwischenkreisschiene oder mit der unteren Zwischenkreisschiene verbunden und im Bereich des Nulldurchgangs der Wechselspannung getaktet betrieben, während die zweite Halbbrücke zumindest im Bereich des Spannungsmaximums dauerhaft getaktet wird. Dadurch kann die der ersten Halbbrücke zugeordnete erste Drossel mit geringerer Stromsättigung und/oder mit höheren Schaltverlusten gewählt werden.

Es wird ersichtlich, dass die beiden Drosseln bei dieser Betriebsweise nicht symmetrisch betrieben sind. So wird die erste Drossel im Unterschied zur zweiten Drossel im Bereich des Spannungsmaximums nicht getaktet. Demgegenüber findet die Taktung der ersten Drossel bei niedrigen Spannungen im Bereich des Nulldurchgangs statt. Da im üblichen Betrieb des Wechselrichters mit geringer Blindleistung der Stromverlauf dem Spannungsverlauf gleicht, wird die erste Drossel somit in gewünschter Weise bei hoher Taktung mit geringen Strömen belastet und ist hohen Strömen nur dann ausgesetzt, wenn keine Taktung vorgenommen wird.

Speist der Wechselrichter auch Blindleistung ein, ist der Strom im Nulldurchgang der Wechselspannung von Null verschieden. Dies bedeutet, dass zu dem Zeitpunkt, an dem die erste Halbbrücke in einen statischen Betrieb übergeht, der Strom durch die erste Drossel erhöht sein kann. In diesem Fall muss die erste Drossel entsprechend für einen höheren Sättigungsstrom ausgelegt werden.

Das angegebene Verfahren kann mit anderen Worten auch dadurch beschrieben werden, dass die erste Halbbrücke im Bereich des Spannungsmaximums bei einem Tastverhältnis von 0 % oder von 100 % verharrt. Im Bereich des Nulldurchgangs wird das Tastverhältnis der ersten Halbbrücke zwischen 0 % und 100 % variiert. Das Tastverhältnis kann hierbei beispielsweise über die Einschaltdauer des Schaltelements 11, wie aus Fig. 1 ersichtlich, gegenüber der Periodendauer der Taktung definiert sein. Eine dauerhafte Klemmung der ersten Halbbrücke an der oberen Zwischenkreisschiene bedeutet insofern ein Tastverhältnis von 100 %. Eine dauerhafte Klemmung der ersten Halbbrücke an die untere Zwischenkreisschiene entspricht dann einem Tastverhältnis von 0 %.

Somit wird durch das vorteilhaft angegebene Betriebsverfahren im Bereich des Spannungsmaximums das vorbeschriebene Einphasenchopping verwendet, was mit den Vorteilen eines höheren Wirkungsgrades des Wechselrichters verbunden ist. Im Bereich des Nulldurchganges, in dem beim Einphasenchopping die erste Halbbrücke zwischen einer dauerhaften Klemmung an der oberen und an der unteren Zwischenkreisschiene wechselt, wird jedoch der Potenzialsprung abgeflacht, da hier bereits die Taktung der ersten Halbbrücke einsetzt.

In einer besonders vorteilhaften Ausgestaltung wird die erste Halbbrücke während des Nulldurchgangs der Wechselspannung derart getaktet, dass der Wechsel zwischen ihren Schaltzuständen einer dauerhaften Verbindung mit der oberen Zwischenkreisschiene und einer dauerhaften Verbindung mit der unteren Zwischenkreisschiene stetig erfolgt. Mit anderen Worten wird der schlagartige Potenzialsprung der ersten Halbbrücke durch einen allmählichen und sanften Übergang zwischen den beiden Potenzialzuständen ersetzt. Beispielsweise wird das Tastverhältnis der ersten Halbbrücke von 100 % bei einer dauerhaften Klemmung an der oberen Zwischenkreisschiene über mehrere Zwischenschritte mit abnehmendem Tastverhältnis auf ein Tastverhältnis von 0 % verändert, was einer dauerhaften Klemmung der ersten Halbbrücke an der unteren Zwischenkreisschiene entspricht. Die für das Einphasenchopping beschriebenen Funkstörungen, die durch schlagartige Potenzialsprünge auftreten, werden hierdurch nicht nur verringert, sondern vermieden. Insbesondere kann der Potenzialwechsel auch linear mit der Zeit erfolgen.

Wenn sich das Tastverhältnis im Bereich des Nulldurchgangs linear ändert, so ergibt sich über eine Periode der Wechselspannung betrachtet ein trapezförmiger Verlauf des Potenzials am Ausgang der ersten Drossel. Bei angeschlossenem Netz mit Bezugspotential entspricht dies dann einem ebenfalls trapezförmigen Verlauf des Potenzials an der Gleichstromquelle, insbesondere am Solargenerator. Natürlich sind auch andere Spannungsverläufe zur Ausgestaltung der Erfindung denkbar.

Während die erste Halbbrücke entsprechend dem angegebenen Verfahren getaktet, bzw. abschnittsweise dauerhaft geklemmt betrieben wird, wird die zweite Halbbrücke so betrieben, dass der Ausgangsstrom und/oder die Ausgangsspannung des Wechselrichters den gewünschten, in der Regel sinusartigen-Verlauf aufweist. Zu einer entsprechenden Regelung und/oder Steuerung der zweiten Halbbrücke ist es zweckmäßig, dass der Schaltzustand der ersten Halbbrücke, die am Ausgang der ersten Drossel anstehende Spannung und/oder der durch die erste Drossel fließende Strom im Sinne eines Feed-Forward-Verfahrens berücksichtigt wird, um eine bessere Regelgüte zu erreichen.

Mit dem modifizierten Betriebsverfahren eines Einphasenchoppings, wobei der Potenzialsprung der ersten Halbbrücke abgeflacht wird, ergibt sich insgesamt gegenüber einem symmetrischen Betrieb des Wechselrichters ein erhöhter Wirkungsgrad. Zugleich sind die unerwünschten Potenzialsprünge vermieden. Gegenüber bekannten Wechselrichtern des Standes der Technik entsprechend den Fig. 2 und 3 sind jedoch keine zusätzlichen Schaltelemente nötig. Vielmehr kann eine Drossel sogar geringwertiger ausgelegt werden.

Im Falle eines angeschlossenen Netzes ist der N-Leiter des Netzes gewöhnlich über die erste Drossel mit der ersten Halbbrücke verbunden. Entsprechend ändert sich das Potenzial der Gleichstromquelle bzw. des Zwischenkreises gemäß dem Schaltzustand der ersten Halbbrücke. Die Leitungen L und N eines Netzes können jedoch auch vertauscht werden. In diesem Fall ist der Spannungshub zwischen der Gleichstromquelle, insbesondere einem Solargenerator, und dem N-Leiter verringert, da er durch die Netzspannung teilweise kompensiert wird. Dadurch ist es möglich, den Ableitstrom der Gleichstromquelle, insbesondere des Solargenerators, zu senken.

Im Bereich des Nulldurchgangs ist es bevorzugt auch möglich, die Taktung der zweiten Halbbrücke auszusetzen. Wegen der weiteren Reduzierung der Schaltvorgänge wird hierdurch der Wirkungsgrad weiter verbessert. Insbesondere ist dies bei Teillast der Fall. Dazu wird auf die DE 10 2007 058 633 B4 oder auf die noch nicht veröffentlichte DE 10 2011 014 600 A verwiesen.

Zwei oder mehrere der Halbbrücken können auch parallel geschaltet und im Multiphasenbetrieb eingesetzt werden, um einen Stromripple am Ausgang des Wechselrichters und damit die Funkstörungen zu verringern.

Bevorzugt ist die zweite Drossel mit dem Mittenabgriff zwischen den Teil-Kondensatoren getaktet verbindbar. An dem Mittenabgriff liegt dabei bevorzugt und insbesondere die halbe Zwischenkreis-Spannung an. Damit ist der Spannungshub an der zweiten Drossel halbiert, so dass die zweite Drossel ebenfalls geringer ausgelegt werden kann und insofern weniger Verluste hat. Da auch die Spannungshübe an den Schaltelementen der dann als Dreipunkt-Brücke ausgestalteten zweiten Halbbrücke nur noch halb so groß sind wie in einer reinen Halbbrücke, sinken auch die Verluste in diesen Schaltelementen.

Um den Mittelpunkt der Zwischenkreis-Kondensatoren zu stabilisieren, kann zeitweise vom vorhergesehenen regulären Taktmuster der Halbbrücken abgewichen werden. Dadurch wird es ermöglicht, die Ladung der Teil-Kondensatoren auszubalancieren.

Im Bereich des Nulldurchgangs wird die erste Drossel über die erste Halbbrücke bevorzugt gemäß dem modifizierten Verfahren des Einphasenchoppings betrieben, so dass das Potenzial am Ausgang der ersten Drossel vom Potenzial der oberen Zwischenkreisschiene verlangsamt zum Potenzial der unteren Zwischenkreisschiene wandert. Die zweite Drossel kann wie vorbeschrieben getaktet betrieben werden, wobei jedoch zusätzliche Schaltzustände genutzt werden können, welche sich durch die Verbindung der zweiten Halbbrücke zum Mittenabgriff zwischen den Teil-Kondensatoren ergeben.

In einer besonders vorteilhaften Ausgestaltung bleibt die zweite Halbbrücke im Bereich des Nulldurchgangs dauerhaft mit dem Mittenabgriff verbunden. Die zweite Halbbrücke wird während dieser Dauer dann nicht zum Aufbau des Spannungsverlaufs an den Anschlusspolen verwendet. Vielmehr geschieht dies ausschließlich über die Taktung der ersten Halbbrücke. Aufgrund der hierdurch verringerten Schaltvorgänge sind die Verluste weiter reduziert.

Erreicht der Momentwert der Wechselspannung die Hälfte der Zwischenkreis-spannung bzw. den Wert der durch den Mittenabgriff zwischen den Teil-Kondensatoren gegebenen Potenzialdifferenz zu einer der Zwischenkreisschienen, so kann durch Taktung der ersten Halbbrücke bei dauerhafter Klemmung der zweiten Halbbrücke auf den Mittenabgriff eine weitere Vergrößerung der Ausgangsspannung nicht mehr erzielt werden. Bevorzugt wird dieser Zustand herangezogen, um die zweite Halbbrücke dann auf Taktbetrieb umzuschalten. Erst ab diesem Wert beginnt die Dreipunkt-Brücke, vorliegend demnach die zweite Halbbrücke, zu takten, wobei über die Wahl des Tastverhältnisses der gewünschte Verlauf der Ausgangsspannung bzw. des Ausgangsstromes gesteuert bzw. geregelt wird. Da vorliegend nur jeweils eine der beiden Halbbrücken taktet, sind die Schaltverluste reduziert.

Ist zusätzlich die erste Halbbrücke getaktet mit dem Mittenabgriff zwischen den Teil-Kondensator verbindbar, so ist auch für die erste Drossel ein zusätzlicher Schaltzustand möglich, wodurch auch diese Drossel weiter verkleinert und die Verluste an den Schaltelementen in der ersten Halbbrücke reduziert werden können.

Weiter bevorzugt ist wenigstens ein DCDC-Wandler zur Umsetzung der Spannung einer oder mehrerer Gleichstromquellen auf die Zwischenkreis-Spannung umfasst. Insbesondere setzt ein solcher DCDC-Wandler die Spannung eines Solargenerators auf die Zwischenkreis-Spannung um. Dabei kann der DCDC-Wandler so ausgestaltet sein, dass er eine pulsierende Gleichspannung liefert, welche dynamisch auf den momentanen Bedarf des Wechselrichters angepasst ist. Dadurch kann vermieden werden, dass die Spannung des Solargenerators im DCDC-Wandler unnötig hochgesetzt und anschließend wieder auf die Netzspannung herabgesetzt wird. Ist die Spannung des Solargenerators höher als die Amplitude der Netzspannung, so kann der DCDC-Wandler überbrückt werden, wodurch die Verluste gesenkt werden.

Durch Verwendung eines potenzialtrennenden DCDC-Wandlers kann der Solargenerator vom Netz galvanisch getrennt werden.

Weiter bevorzugt ist der eingesetzte DCDC-Wandler dazu ausgebildet, jeweils die Spannung von mindestens zwei Solargeneratoren auf eine gemeinsame Zwischenkreis-Spannung umzusetzen. DCDC-Wandler dieser Art verfügen über einen sehr hohen Wirkungsgrad. Weiter vorteilhaft wird ein DCDC-Wandler eingesetzt, der über einen Mittelpunktanschluss am Ausgang verfügt, welcher mit dem Mittelpunkt des Zwischenkreises des Wechselrichters verbunden werden kann. Falls der Wechselrichter über wenigstens eine Dreipunkt-Brücke wie vorbeschrieben verfügt, kann dadurch eine Asymmetrie der Solargeneratoren durch den Wechselrichter ausgeglichen werden. Dazu wird durch Abweichung von der vorgesehenen regulären Taktungsart mindestens einer Dreipunkt-Brücke gezielt Ladung zwischen den Teil-Kondensatoren verschoben.

Es ist auch möglich, den Wechselrichter direkt aus zwei Solargeneratoren zu speisen, wobei ein Solargenerator mit dem oberen Zwischenkreis-Teilkondensator und der andere Solargenerator mit dem unteren Zwischenkreis-Teilkondensator parallel verbunden sind. Tritt eine Unsymmetrie zwischen den Solargeneratoren auf, so kann diese wie oben beschrieben durch Abweichung vom regulären Taktmuster ausbalanciert werden. Dadurch ist es innerhalb gewisser Toleranzen möglich, für beide Solargeneratoren ein separates Maximum-Power-Point-Tracking durchzuführen.

Ausführungsbeispiele der Erfindung werden anhand einer Zeichnung näher erläutert. Dabei zeigen:
- Fig. 1: einen Wechselrichter gemäß Stand der Technik mit H4-Brücke,
- Fig. 2: einen Wechselrichter nach Stand der Technik mit direktem Freilauf,
- Fig. 3: einen Wechselrichter nach Stand der Technik mit einem Schaltelement in der oberen Zwischenkreisschiene,
- Fig. 4: eine erste Ausführungsform des erfindungsgemäßen Wechselrichters,
- Fig. 5: eine zweite Ausführungsform des erfindungsgemäßen Wechselrichters,
- Fig. 6A: eine Halbbrücke mit einem zusätzlichem Mittelzweig,
- Fig. 6B: eine erste Ausgestaltungsvariante des Mittelzweigs
- Fig. 6C: eine zweite Ausgestaltungsvariante des Mittelzweigs
- Fig. 6D: eine dritte Ausgestaltungsvariante des Mittelzweigs
- Fig. 7: eine dritte Ausführungsform des erfindungsgemäßen Wechselrichters,
- Fig. 8: eine Schaltungsanordnung aus einem Wechselrichter und einem eingangsseitig angeschlossenen DCDC-Wandler
- Fig. 9: eine Schaltungsanordnung aus einem Wechselrichter und einem eingangsseitig angeschlossenen DCDC-Wandler mit zwei Eingängen,
- Fig. 10: in einem Diagramm verschiedene Spannungsverläufe im Wechselrichter und
- Fig. 11: in einem Diagramm die Potenzialverläufe eines als Gleichstromquelle angeschlossenen Solargenerators.

Die Fig. 1 bis 3 betreffen Wechselrichter 1 gemäß Stand der Technik. Zur Erläuterung wird auf die diesbezüglichen Passagen in der vorangegangenen Beschreibung verwiesen.

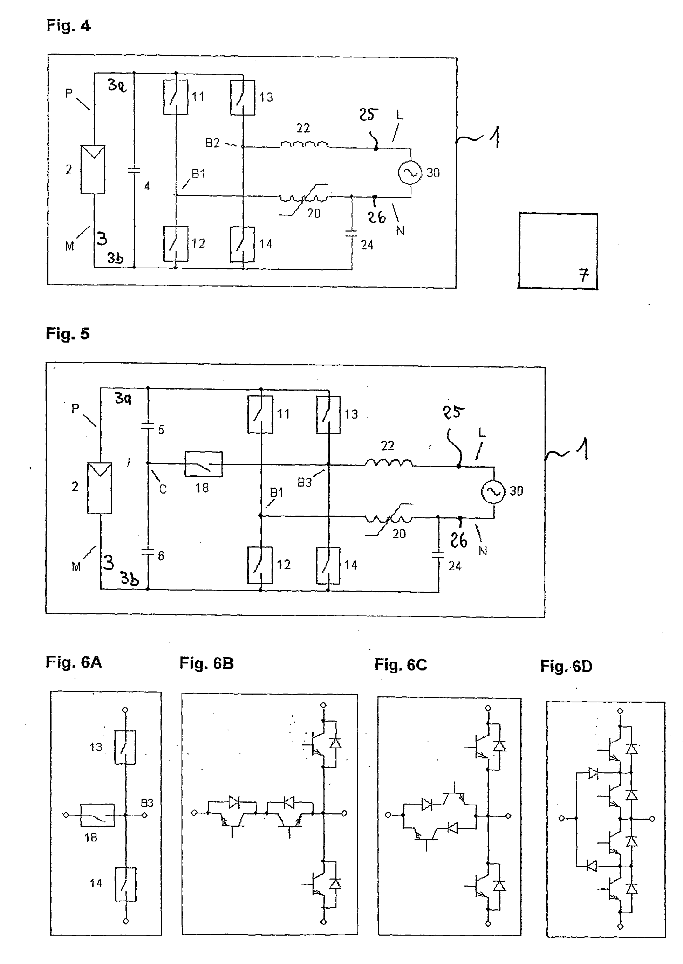

In Fig. 4 ist eine erste Ausgestaltung eines Wechselrichters 1 gezeigt, der sich durch asymmetrische Drosseln 20, 22 sowie durch einen Filter-Kondensator 24 gegenüber den Wechselrichtern 1 gemäß Fig. 1 bis 3 unterscheidet.

Der Wechselrichter 1 umfasst einen Zwischenkreis-Kondensator 4, welcher von einem Solargenerator 2 als Gleichstromquelle über die positive Zuleitung P und die negative Zuleitung M gespeist wird. Der Zwischenkreis 3 ist entsprechend mit einer oberen Zwischenkreisschiene 3a und mit einer unteren Zwischenkreisschiene 3b eingezeichnet. Parallel zum Zwischenkreis-Kondensator 4 ist eine erste Halbbrücke mit den Schaltelementen 11, 12 und eine zweite Halbbrücke mit den Schaltelementen 13, 14 geschaltet. Eine erste Drossel 20 verbindet den Ausgang B1 der ersten Halbbrücke 11, 12 über den N-Leiter mit einem Wechselstromnetz 30. Eine zweite Drossel 22 verbindet den Ausgang B2 der zweiten Halbbrücke 13, 14 über den L-Leiter mit dem Wechselstromnetz 30.

Die Zuleitungen L, N des Wechselstromnetzes 30 sind entsprechend mit den Anschlusspolen 25 bzw. 26 des Wechselrichters 1 verbunden.

Der dem Wechselstromnetz 30 zugewandte Anschluss der ersten Drossel 20 bzw. der Anschlusspol 26 ist über den Filter-Kondensator 24 mit einem Anschluss des Zwischenkreis-Kondensators 4 verbunden. Vorliegend ist der Filter-Kondensator 24 mit der unteren Zwischenkreisschiene 3b kontaktiert. Dieser Anschluss kann aber auch ein Mittenabgriff des Zwischenkreis-Kondensators sein, falls dieser aus einer Reihenschaltung von mehreren Teil-Kondensatoren besteht. Durch den Filter-Kondensator 24 wird das Wechselstromnetz 30 gegenüber dem Zwischenkreis 3 bzw. gegenüber dem Solargenerator 2 hochfrequenzmäßig abgeblockt, d. h. es werden Potenzialsprünge zwischen dem Wechselstromnetz 30 und dem Zwischenkreis 3 bzw. dem Solargenerator 2 verhindert, selbst wenn die Drosseln 20, 22 wie beabsichtigt asymmetrisch betrieben werden.

Die erste Drossel 20 ist gegenüber der zweiten Drossel 22 verkleinert und weist insbesondere eine niedrigere Stromsättigung sowie höhere Schaltverluste auf.

Dem Wechselrichter 1 ist eine Steuereinheit 7 zugeordnet, die zur Ansteuerung bzw. zur Regelung der Schaltelemente 11 bis 14 ausgebildet ist.

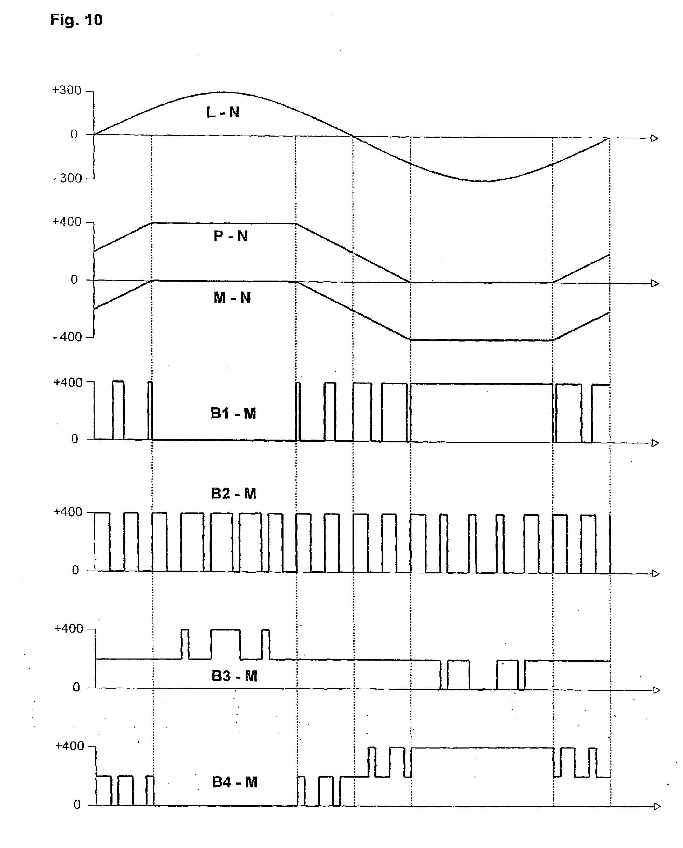

Im Bereich des Nulldurchgangs des Wechselstromnetzes 30 wird die erste Halbbrücke 11, 12 so getaktet, dass ihr Tastverhältnis stetig zwischen 0 % und 100 % verläuft und im Bereich des Netzscheitels auf 0 % bzw. 100 % verharrt. Das Tastverhältnis ist hierbei definiert als das Verhältnis aus Einschaltdauer des oberen Schaltelements 11 zur Periodendauer der Taktung. Ein Einschaltverhältnis von 100 % der ersten Halbbrücke 11, 12 entspricht somit einer dauerhaften Klemmung der ersten Halbbrücke 11, 12 an die obere Zwischenkreisschiene 3a. Bei einem Tastverhältnis von 0 % ist die erste Halbbrücke 11, 12 dementsprechend dauerhaft über das untere Schaltelement 12 an die untere Zwischenkreisschiene 3b geklemmt. Die resultierende Spannung zwischen dem Ausgang B1 der ersten Halbbrücke 11, 12 und dem Minuspol M bzw. der unteren Zwischenkreisschiene 3b ist in Fig. 10 schematisch dargestellt (Spannung B1-M).

In Folge der beschriebenen Taktung ändert sich das Potenzial des Solargenerators gegen den N-Leiter des Wechselstromnetzes 30 um den Betrag der Zwischenkreisspannung, jedoch nicht schlagartig. Dadurch werden die beim herkömmlichenEinphasenchopping auftretenden Funkstörungen vermieden.

Wird das Tastverhältnis der ersten Halbbrücke 11, 12 im Bereich des Nulldurchgangs linear verändert, so ergibt sich über eine Netzperiode betrachtet ein trapezförmiger Verlauf des Potenzials am Solargenerator 2. Das ist in Fig. 10 aus dem jeweiligen Verlauf der Spannungen P-N und M-N dargestellt. Grundsätzlich sind auch andere Spannungsverläufe denkbar.

Die zweite Halbbrücke 13, 14 wird so getaktet, dass der Ausgangsstrom oder die Ausgangsspannung zwischen den Anschlusspolen 25, 26 den gewünschten, in der Regel einen sinusförmigen Verlauf aufweist. Der Verlauf der Spannung zwischen dem Ausgang B2 der zweiten Halbbrücke 13, 14 und dem Minuspol M bzw. der unteren Zwischenkreisschiene 3b ist in Fig. 10 ebenfalls dargestellt (Spannung B2-M). Bevorzugt wird bei der Regelung der zweiten Halbbrücke 13, 14 durch die Steuereinheit 7 der Zustand der ersten Halbbrücke 11, 12, die am netzzugewandten Pol der ersten Drossel 20 bzw. am Anschlusspol 26 anstehende Spannung und/oder der Strom in der ersten Drossel 20 berücksichtigt, um eine bessere Regelgüte zu erreichen.

An den Spannungsverläufen B1-M und B2-M entsprechend Fig. 10 wird ersichtlich, dass die erste Halbbrücke 11, 12 während der Spannungsmaxima zwischen den Anschlusspolen 25, 26 entweder dauerhaft auf die untere Zwischenkreisschiene 3b oder dauerhaft an die obere Zwischenkreisschiene 3a geklemmt ist. Zwischen diesen beiden Zuständen wird die erste Halbbrücke 11, 12 gegenüber dem herkömmlichen Einphasenchopping beim Nulldurchgang nicht schlagartig umgeschaltet. Vielmehr wird die erste Halbbrücke 11, 12 im Bereich des Nulldurchganges mit einem sich linear verändernden Tastverhältnis derart geschaltet, dass der Potenzialübergang zwischen dem Minuspol M und dem Pluspol P linear verläuft. Anhand des Verlaufes der Spannung B1-M wird dies deutlich erkennbar. Im Bereich des Nulldurchganges ändert sich die Einschaltdauer des entsprechenden Schaltelements 11, 12 allmählich, bis wiederum die dauerhafte Klemmung an der anderen Zwischenkreisschiene erfolgt.

Während der Taktung der ersten Halbbrücke 11, 12 wird das sinusförmige Ausgangssignal durch eine entsprechend angepasste Taktung der zweiten Halbbrücke 13, 14 erzeugt. Dies ist aus dem Spannungsverlauf B2-M in Fig. 10 ebenfalls ersichtlich.

Der sich ergebende sinusförmige Spannungsverlauf L-N zwischen den Anschlusspolen 25, 26 des Wechselrichters 1 ist ebenfalls in Fig. 10 dargestellt.

Die Zuleitungen L und N können auch vertauscht werden. In diesem Fall ist der Spannungshub zwischen den Zuleitungen P bzw. M des Solargenerators 2 und dem N-Leiter verringert, da er durch die Netzspannung teilweise kompensiert wird. Außerdem ist der Verlauf der Spannungen verändert.

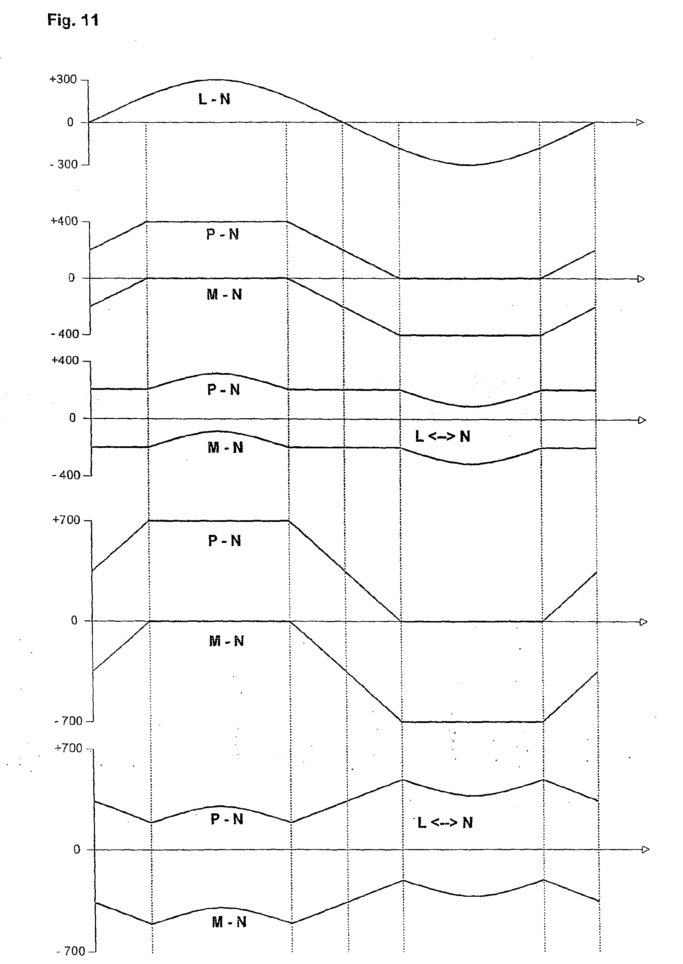

Dazu zeigt Fig. 11 die resultierenden Spannungen zwischen den Zuleitungen P bzw. M des Solargenerators 2 und dem N-Leiter (Spannungen P-N und M-N). Dabei sind zunächst die Verläufe für eine Solargeneratorspannung von 400 V und dann für 700 V dargestellt. In beiden Fällen sind jeweils zuerst die Spannungsverläufe bei normalem und dann bei vertauschtem Anschluss der Leiter L und N dargestellt. Bei vertauschtem Anschluss sind die Spannungshübe reduziert. Dadurch ist es möglich, den Ableitstrom des Solargenerators 2 zu senken.

Da das Tastverhältnis der ersten Halbbrücke 11, 12 nach dem Nulldurchgang im Bereich der Spannungsmaxima einen Wert von 0 % bzw. von 100 % erreicht, bzw. die Halbbrücke 11, 12 dann dauerhaft auf das untere, bzw. auf das obere Zwischenkreis-Potenzial geklemmt ist, arbeitet der derart betriebene Wechselrichter während längerer Zeitabschnitte und insbesondere im Bereich höherer Ströme entsprechend dem als verlustarm bekannten Verfahren des Einphasenchoppings, ohne dass jedoch die damit verbundenen Funkstörungen auftreten.

Da die erste Drossel 20 im Bereich größerer Ströme nicht getaktet wird, kann sie in diesem Fall in Sättigung sein. Dadurch wird die erste Drossel 20, wie in Fig. 4 angedeutet, als eine Sättigungsdrossel ausgelegt, wodurch ihre Bauform und die Drosselverluste deutlich kleiner gemacht werden können. Insbesondere kann eine Drossel verwendet werden, die bei getaktetem Betrieb höhere Verluste hat, wie z. B. eine Eisenpulverdrossel.

Der Wechselrichter 1 kann auch Blindleistung einspeisen, so dass der Strom im Nulldurchgang der Spannung von Null verschieden ist. Wie bereits ausgeführt, muss in diesem Fall die erste Drossel 20 für einen entsprechend höheren Sättigungsstrom ausgelegt werden.

Die in den Fig. 4 bis 9 dargestellten Schaltelemente 11 bis 14 können getaktet betreibbare Halbleiterschaltelemente wie Mosfets oder IGBT's enthalten. Diesen können Freilaufdioden antiparallel zugeschaltet sein, welche die Halbleiterschaltelemente vor Rückwärtsspannungen schützen und einen Freilauf ermöglichen.

Die Steuereinheit 7 kann neben der Taktung der Schaltelemente 11 bis 14 ein sogenanntes Maximum-Power-Point-Tracking der Gleichstromquelle 2 durchführen, d. h. diese im Bereich ihrer maximalen Leistung betreiben.

In Fig. 5 ist eine zweite Ausgestaltung eines Wechselrichters 1 dargestellt. Hierbei ist im Unterschied zum Wechselrichter 1 gemäß Fig. 4 eine Serienschaltung von zwei Teil-Kondensatoren 5 und 6 anstelle des einzelnen Zwischenkreis-Kondensators 4 gebildet. Zusätzlich ist eine getaktet schaltbare Verbindung 18 zwischen dem Ausgang B3 der zweiten Halbbrücke 13, 14 und einem Mittenabgriff C des Zwischenkreis-Kondensators 5, 6 vorgesehen. Diese schaltbare Verbindung 18 kann beispielsweise durch eines oder durch mehrere zusätzliche Schaltelemente realisiert werden. Die bisherige zweite Halbbrücke 13, 14 wird also zu einer sogenannten Dreipunkt-Brücke mit den Schaltelementen 13, 14 und 18 erweitert. Damit ist in der positiven und in der negativen Halbwelle je ein weiterer Schaltzustand möglich.

Am Mittenabgriff C des Zwischenkreis-Kondensators 5, 6 liegt vorzugsweise die halbe Zwischenkreis-Spannung an. Der Spannungshub an der zweiten Drossel 22 ist somit nur noch halb so groß wie in der Schaltung gemäß Fig. 4. Die zweite Drossel 22 kann daher wesentlich kleiner ausgelegt werden und hat deshalb weniger Verluste.

Da auch die Spannungshübe an den Schaltelementen der Dreipunkt-Brücke 13, 14, 18 nur noch halb so groß sind wie in einer Halbbrücke mit nur zwei Schaltelementen, sinken auch die Verluste in diesen Schaltelementen.

Um den Mittenabgriff C des Zwischenkreis-Kondensators 5, 6 zu stabilisieren, kann zeitweise vom regulären Taktmuster abgewichen werden. Die zweite Drossel 22 kann z. B. statt mit dem Mittenabgriff C des Zwischenkreis-Kondensators 5, 6 mit dessen positivem bzw. negativem Anschluss, mit anderen Worten mit der unteren oder mit der oberen Zwischenkreisschiene 3a bzw. 3b verbunden werden. Auf diese Weise wird eine Ladungsentnahme aus dem Mittenabgriff C des Zwischenkreis-Kondensators 5, 6 verhindert. Dadurch ist es möglich, die Ladung der Teil-Kondensatoren 5, 6 auszubalancieren.

In Fig. 6a ist schematisch eine Halbbrücke 13, 14 mit einem taktbaren Mittelzweig bzw. als Dreipunkt-Brücke dargestellt. Diese Dreipunkt-Brücke 13, 14 und 18 kann durch verschiedene Schaltungen realisiert werden, die in den Fig. 6b, 6c und 6d gezeigt sind. Bei der Schaltung gemäß Fig. 6d ist es auch möglich, die beiden zum Zwischenkreis-Mittelpunkt führenden Dioden durch antiparallel geschaltete aktive Halbleiterschalter zu unterstützen. Selbstverständlich können auch andere Schaltungen verwendet werden, welche in der Lage sind den Brückenausgang B3 der zweiten Halbbrücke 13, 14 wahlweise mit dem Pluspol, dem Minuspol oder dem Mittenabgriff C des Zwischenkreis-Kondensators 5, 6 zu verbinden. Die getaktet schaltbare Verbindung 18 kann auch durch ein einziges bidirektionales Halbleiterelement realisiert werden, welches möglicherweise in Zukunft mit ausreichend guten Schalteigenschaften verfügbar sein wird.

Beide Drosseln 20 und 22 können analog zur Beschreibung für die Schaltung gemäß Fig. 4 betrieben werden, wobei jedoch im Fall der zweiten Drossel 22 zusätzliche Schaltzustände genutzt werden können, welche sich durch die Verbindung zum Zwischenkreis-Mittenabgriff C ergeben.

In einer vorteilhaften Taktungsvariante bleibt die zweite Drossel 22 im Bereich des Nulldurchgangs zunächst mit dem Zwischenkreis-Mittenabgriff C verbunden, d. h. die Dreipunkt-Brücke 13, 14, 18 kann nicht zur Regelung der Ausgangsspannung bzw. des Ausgangsstroms genützt werden, sondern schaltet lediglich die Verbindung zum Zwischenkreis-Mittenabgriff C statisch durch. Die Regelung erfolgt daher allein über das Tastverhältnis der ersten Halbbrücke 11, 12.

Ist der Momentwert der Netzspannung so groß wie die Hälfte der Zwischenkreis-Spannung geworden, so wird die erste Halbbrücke 11, 12 wie bisher in einen statischen Zustand versetzt, in welchem die erste Drossel 20 mit dem Plus- bzw. dem Minuspol des Zwischenkreises 3 verbunden ist.

Erst jetzt beginnt die Dreipunkt-Brücke 13, 14, 18 zu takten, wobei über die Wahl des Tastverhältnisses in bekannter Weise die Ausgangsspannung bzw. der Ausgangsstrom gesteuert bzw. geregelt wird. Da nur jeweils eine der beiden Brückenschaltungen taktet, sind die Schaltverluste reduziert.

Wenn die Spannung am Zwischenkreis 3 steigt, dauert es länger, bis die erste Drossel 20 statisch mit dem Plus- bzw. Minuspol des Zwischenkreises verbunden werden kann. Dementsprechend verkürzt sich die Phase, in welcher die zweite Drossel 22 getaktet betrieben wird. Ist die Spannung am Zwischenkreis größer als der doppelte Scheitelwert der Netzspannung, so bleibt die Drossel 22 permanent mit dem Zwischenkreis-Mittenabgriff C verbunden. In diesem Fall muss die erste Drossel 20 durchgängig getaktet werden, d. h. sie muss dann so ausgelegt werden, dass sie auch beim Maximalwert des Stroms nicht in Sättigung kommt.

Der Verlauf der Spannung zwischen dem Ausgang B3 der Dreipunkt-Brücke 13, 14, 18 und dem Minuspol M des Zwischenkreis-Kondensators 4 ist in Fig. 10 dargestellt (Spannung B3-M).

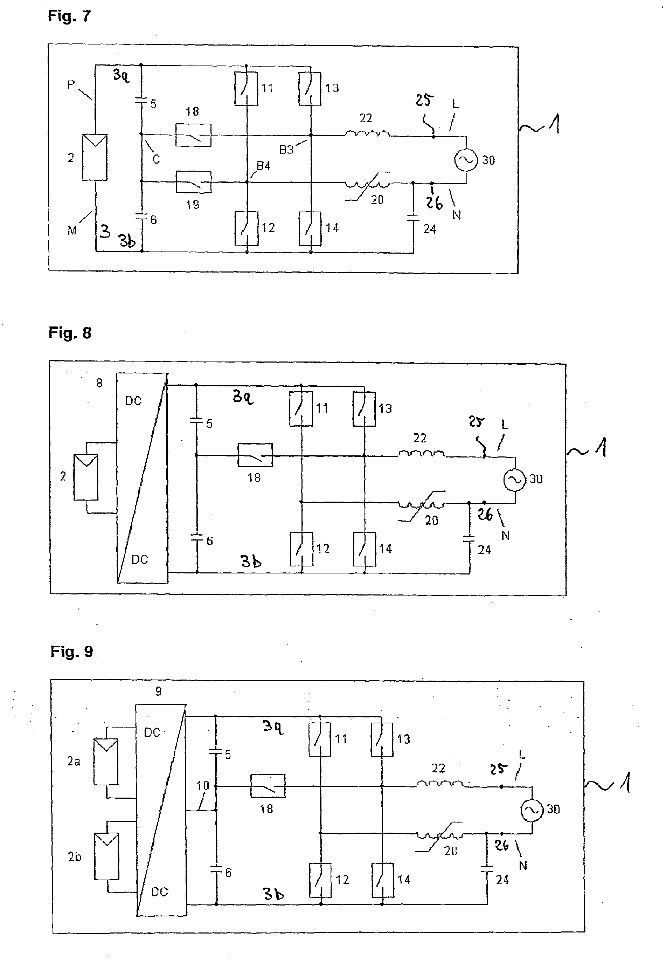

In Fig. 7 ist eine dritte Ausgestaltung eines Wechselrichters 1 dargestellt. Hierbei ist zusätzlich zur zweiten Halbbrücke 13, 14 auch die erste Halbbrücke 11, 12 in gleicher Weise zu einer Dreipunkt-Brücke 11, 12, 19 erweitert. Dadurch ist auch für den Betrieb der ersten Drossel 20 ein zusätzlicher Schaltzustand möglich, wodurch auch diese Drossel 20 verkleinert und die Halbleiterverluste in der ersten Brückenschaltung 11, 12, 19 reduziert werden können.

Der Spannungsverlauf vom Ausgang B4 der zweiten Dreipunkt-Brücke 11, 12, 19 ist wiederum in Fig. 10 verdeutlicht (Spannung B4-M).

In Fig. 8 und in Fig. 9 sind eine vierte und eine fünfte Ausgestaltung eines Wechselrichters 1 dargestellt. Gemäß Fig. 8 befindet sich zwischen dem Solargenerator 2 und dem Zwischenkreis-Kondensator 5, 6 ein DCDC-Wandler 8, welcher die Spannung des Solargenerators 2 auf die Zwischenkreis-Spannung umsetzt. Dabei kann der DCDC-Wandler 8 so ausgestaltet sein, dass er eine pulsierende Gleichspannung liefert, welche dynamisch auf den momentanen Bedarf des Wechselrichters 1 angepasst ist. Dadurch kann z. B. vermieden werden, dass die Spannung des Solargenerators 2 im DCDC-Wandler 8 unnötig hochgesetzt und anschließend wieder auf die Netzspannung herabgesetzt wird. Ist die Spannung des Solargenerators 2 höher als die Amplitude der Netzspannung, so kann der DCDC-Wandler 8 überbrückt werden.

Durch Verwendung eines potenzialtrennenden DCDC-Wandlers 8 kann der Solargenerator 2 vom Wechselstromnetz 30 galvanisch getrennt werden.

Entsprechend Fig. 9 wird der Zwischenkreis-Kondensator 5, 6 über einen DCDC-Wandler 9 gespeist, welcher die Spannung von mindestens zwei Solargeneratoren 2a, 2b auf die Zwischenkreis-Spannung umsetzt. Verfügt ein derartiger DCDC-Wandler über einen Mittelpunktanschluss am Ausgang, so kann dieser an dem Mittelpunkt des Zwischenkreis-Kondensators 5, 6 über eine Verbindung 10 angeschlossen werden. Verfügt der Wechselrichter 1 über mindestens eine Dreipunkt-Brücke, kann dadurch eine Asymmetrie der Solargeneratoren 2a, 2b durch den Wechselrichter 1 ausgeglichen werden. Dazu wird durch Abweichung von der regulären Taktungsart mindestens einer Dreipunkt-Brücke gezielt Ladung zwischen den Teilkondensatoren 5, 6 verschoben.

### Bezugszeichenliste

- 1: Wechselrichter
- 2, 2a, 2b: Gleichstromquelle
- 3: Zwischenkreis
- 3a: obere Zwischenkreisschiene
- 3b: untere Zwischenkreisschiene
- 4: Zwischenkreis-Kondensator
- 5,6: Teil-Kondensatoren
- 7: Steuereinheit
- 8: DCDC-Wandler für eine Gleichstromquelle
- 9: DCDC-Wandler für zwei Gleichstromquellen
- 10: Verbindungsleitung
- 11-19: Schaltelemente
- 20, 22: Drosseln
- 24: Filter-Kondensator
- 25: erster Anschlusspol
- 26: zweiter Anschlusspol
- 30: Wechselstromnetz
- B1 - B4: Ausgänge Brückenschaltungen
- C: Mittenabgriff
- P, M: Anschlüsse Gleichstromquelle
- L, N: Leitungen Wechselstromnetz

## Patentansprüche

1. Wechselrichter (1), insbesondere Solarwechselrichter, zum Umsetzen einer Gleichspannung in eine Wechselspannung mit
- einem Zwischenkreis (3), umfassend eine obere Zwischenkreisschiene (3a) und eine untere Zwischenkreisschiene (3b),
- einer ersten Halbbrücke (11, 12), die zwischen die obere Zwischenkreisschiene (3a) und die untere Zwischenkreisschiene (3b) geschaltet ist,
- einer zweiten Halbbrücke (13, 14), die zwischen die obere Zwischenkreisschiene (3a) und die untere Zwischenkreisschiene (3b) geschaltet ist,
- einer ersten Drossel (20), die einen Ausgang der ersten Halbbrücke (11, 12) mit einem ersten Anschlusspol (26) der Wechselspannung verbindet,
- und einer zweiten Drossel (22), die einen Ausgang der zweiten Halbbrücke (13, 14) mit einem zweiten Anschlusspol (25) der Wechselspannung verbindet,
**dadurch gekennzeichnet,**
**dass** eine der Drosseln (20, 22) bei einem geringeren Strom sättigt und/oder höhere Schaltverluste aufweist als die andere der Drosseln (20, 22).

2. Wechselrichter (1) nach Anspruch 1,
**dadurch gekennzeichnet,**
**dass** zusätzlich ein Filter-Kondensator (24) umfasst ist, der wenigstens einen der Anschlusspole (25, 26) der Wechselspannung mit dem Zwischenkreis (3) verbindet.

3. Wechselrichter (1) nach Anspruch 2,
**dadurch gekennzeichnet,**
**dass** der Filter-Kondensator (24) mit dem Anschlusspol (26) verbunden ist, in den die Drossel (20, 22) mit geringerer Stromsättigung und/oder mit höheren Schaltverlusten geschaltet ist.

4. Wechselrichter (1) nach einem der vorhergehenden Ansprüche,
**dadurch gekennzeichnet,**
**dass** die Halbbrücken (11, 12, 13, 14) jeweils zwei getaktet betreibbare Halbleiterschaltelemente umfassen, die mit je einer Freilaufdiode beschaltet sind.

5. Wechselrichter (1) nach einem der vorhergehenden Ansprüche,
**dadurch gekennzeichnet,**
**dass** ein Zwischenkreis-Kondensator (4) zu den Halbbrücken (11, 12, 13, 14) parallel geschaltet ist.

6. Wechselrichter (1) nach Anspruch 5,
**dadurch gekennzeichnet,**
**dass** der Zwischenkreis-Kondensator (4) durch eine Serienschaltung von mindestens zwei Teil-Kondensatoren (5, 6) gebildet ist, und dass eine oder jede der Drosseln (20, 22) über steuerbare Schaltmittel (18, 19) mit einem Mittenabgriff (C) zwischen den Teil-Kondensatoren (5, 6) verbindbar ist.

7. Wechselrichter (1) nach Anspruch 6,
**dadurch gekennzeichnet,**
**dass** die Schaltmittel (18, 19) wenigstens ein Halbleiterschaltelement umfassen.

8. Wechselrichter (1) nach einem der vorhergehenden Ansprüche,
**dadurch gekennzeichnet,**
**dass** Zuleitungen (N, L) eines Netzes (30) mit den Anschlusspolen (25, 26) verbunden sind.

9. Wechselrichter (1) nach einem der vorhergehenden Ansprüche,
**dadurch gekennzeichnet,**
**dass** wenigstens ein DCDC-Wandler (8, 9) zur Umsetzung der Spannung einer oder mehrerer Gleichstromquellen auf die Zwischenkreis-Spannung umfasst ist.

10. Wechselrichter (1) nach Anspruch 9,
**dadurch gekennzeichnet,**
**dass** der DCDC-Wandler ausgangsseitig einen Mittelpunktanschluss aufweist, der mit dem Mittenabgriff (C) zwischen Teil-Kondensatoren (5, 6) des Zwischenkreises (3) verbunden ist.

11. Verfahren zum Betreiben eines Wechselrichters (1) mit den Merkmalen gemäß dem Oberbegriff des Anspruchs 1,
**dadurch gekennzeichnet,**
**dass** die beiden Drosseln (20, 22) asymmetrisch betrieben werden.

12. Verfahren nach Anspruch 11,
**dadurch gekennzeichnet,**
**dass** die erste Halbbrücke (11, 12) im Bereich des Spannungsmaximums der ausgegebenen Wechselspannung in jeder Halbwelle dauerhaft abwechselnd mit der oberen Zwischenkreisschiene (3a) oder mit der unteren Zwischenkreisschiene (3b) verbunden und im Bereich des Nulldurchgangs der Wechselspannung getaktet betrieben wird, während die zweite Halbbrücke (13, 14) zumindest im Bereich des Spannungsmaximums dauerhaft getaktet wird.

13. Verfahren nach Anspruch 12,
**dadurch gekennzeichnet,**
**dass** die erste Halbbrücke (11, 12) während des Nulldurchgangs der Wechselspannung derart getaktet wird, dass der Wechsel zwischen ihren Schaltzuständen einer dauerhaften Verbindung mit der oberen Zwischenkreisschiene (3a) und einer dauerhaften Verbindung mit der unteren Zwischenkreisschiene (3b) stetig erfolgt.

14. Verfahren nach Anspruch 12 oder 13,
**dadurch gekennzeichnet,**
**dass** die zweite Halbbrücke (13, 14) derart betrieben wird, dass die zwischen den Ausgangspolen ausgegebene Wechselspannung und/oder der ausgegebene Wechselstrom einen vorgegebenen, insbesondere sinusförmigen Verlauf aufweist.

15. Verfahren nach einem der Ansprüche 11 bis 14,
**dadurch gekennzeichnet,**
**dass** die zweite Halbbrücke (13, 14) getaktet mit einem Mittenabgriff (C) des Zwischenkreises (3) zwischen Teil-Kondensatoren (5, 6) verbunden wird.

16. Verfahren nach Anspruch 15,
**dadurch gekennzeichnet,**
**dass** die zweite Halbbrücke (13, 14) im Bereich des Nulldurchgangs dauerhaft mit dem Mittenabgriff (C) verbunden ist.

17. Verfahren nach Anspruch 16,
**dadurch gekennzeichnet,**
**dass** die zweite Halbbrücke (13, 14) auf Taktbetrieb umgeschaltet wird, wenn der Momentwert der Wechselspannung größer als die Hälfte der Zwischenkreisspannung ist.

18. Verfahren nach einem der Ansprüche 11 bis 17,
**dadurch gekennzeichnet,**
**dass** zur Steuerung und/oder Regelung der zweiten Halbbrücke (13, 14) der Schaltzustand der ersten Halbbrücke (11, 12), die am Ausgang (26) der ersten Drossel (20) anstehende Spannung und/oder der durch die erste Drossel (20) fließende Strom berücksichtigt wird.

19. Wechselrichter (1) nach einem der Ansprüche 1 bis 10 mit einer Steuereinheit (7), die zur Durchführung des Verfahrens nach einem der Ansprüche 11 bis 18 ausgebildet ist.
